(19) Europäisches Patentamt

European Patent Office

Office européen des brevets

(11) **EP 3 882 595 B1**

(12) **EUROPÄISCHE PATENTSCHRIFT**

(45) Veröffentlichungstag und Bekanntmachung des Hinweises auf die Patenterteilung:
**06.08.2025  Patentblatt 2025/32**

(51) Internationale Patentklassifikation (IPC):
***G01K 17/10*** *(2006.01)*      ***G01F 1/66*** *(2022.01)*
***G01F 1/667*** *(2022.01)*

(21) Anmeldenummer: **21160833.6**

(52) Gemeinsame Patentklassifikation (CPC):
**G01K 17/10; G01F 1/668**

(22) Anmeldetag: **04.03.2021**

(54) **VERFAHREN ZUM BETRIEB EINER ENERGIEZÄHLEREINRICHTUNG UND ENERGIEZÄHLEREINRICHTUNG**

METHOD FOR OPERATING AN ENERGY METER AND ENERGY METER

PROCÉDÉ DE FONCTIONNEMENT D'UN DISPOSITIF COMPTEUR D'ÉNERGIE ET DISPOSITIF COMPTEUR D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.03.2020  DE 102020001596**

(43) Veröffentlichungstag der Anmeldung:
**22.09.2021  Patentblatt 2021/38**

(73) Patentinhaber: **Diehl Metering GmbH**
**91522 Ansbach (DE)**

(72) Erfinder:
• **Benkert, Andreas**
**91522 Ansbach (DE)**

• **Mayle, Michael**
**91522 Ansbach (DE)**
• **Sonnenberg, Hans-Michael**
**91564 Neuendettelsau (DE)**
• **Horn, Roland**
**91629 Weihenzell (DE)**

(74) Vertreter: **Diehl Patentabteilung**
**c/o Diehl Stiftung & Co. KG**
**Stephanstraße 49**
**90478 Nürnberg (DE)**

(56) Entgegenhaltungen:
**EP-A1- 2 369 305**      **US-A1- 2013 259 083**

## Beschreibung

Die Erfindung betrifft ein Verfahren zum Betrieb einer Energiezählereinrichtung zur Ermittlung des Energieverbrauchs in einem Temperierungskreislauf, in dem ein Gemisch aus wenigstens zwei Fluiden, insbesondere ein Wasser-Glykol-Gemisch, zirkuliert, wobei die Energiezählereinrichtung eine Ultraschallmesseinrichtung zur Ermittlung des Gemischdurchflusses durch eine Laufzeitmessung, eine Temperaturmesseinrichtung zur Ermittlung einer Temperaturdifferenz zwischen dem Vorlauf und dem Rücklauf des Gemischs und eine Recheneinrichtung zur Ermittlung des Energieverbrauchs unter Berücksichtigung des Durchflusses, der Temperaturdifferenz sowie eines k-Faktors des Gemischs aufweist, wobei zur Ermittlung des Gemischdurchflusses ein Laufzeitdifferenzwert mit einem unter Verwendung eines für ein Referenzgemisch vorgegebenen Kennfelds, insbesondere in Abhängigkeit von dem Laufzeitdifferenzwert und der Temperatur des Gemischs bei der Laufzeitmessung, bestimmbaren Ermittlungsfaktor multipliziert wird. Daneben betrifft die Erfindung eine Energiezählereinrichtung.

Energiezählereinrichtungen, beispielsweise Wärmezähler oder Kältezähler, messen den Energieverbrauch W, beispielsweise basierend auf einer volumetrischen Flussmessung in Verbindung mit dem Temperaturabfall des Trägerfluids zwischen dem Vorlauf und dem Rücklauf ($T_{in}$-$T_{out}$). Zur Berechnung des Energieverbrauchs W wird dabei von der grundsätzlichen Gleichung

$$W = \int_{\Delta t} \rho \cdot c_p (T_{in} - T_{out}) Q \, dt \qquad (1)$$

ausgegangen. Darin bezeichnet $\rho$ die Dichte des Trägerfluids, $c_p$ die spezifische Wärmekapazität bei konstantem Druck des Trägerfluids, wobei das Produkt $\rho \cdot c_p$ üblicherweise als der k-Faktor bezeichnet wird und Q der Durchfluss ist. Als Trägerfluid ist es im Stand der Technik gängig, Gemische verschiedener Fluide, insbesondere verschiedener Flüssigkeiten, einzusetzen. Ein typisches Beispiel sind Wasser-Glykol-Mischungen, das bedeutet, Gemische aus Wasser und einem Glykol als weiterer Flüssigkeit. Dabei sind ZweiKomponenten-Gemische am gängigsten. Wasser-Glykol-Mischungen sind kommerziell erhältlich, und zwar zum einen als benutzungsbereite Gemische, zum anderen als Glykolkonzentrate, die mit Wasser verdünnt werden müssen, um ein gewolltes Mischungsverhältnis zu erzielen.

Im Einsatz besteht dabei das Problem, dass das Mischungsverhältnis im Trägerfluid über die Zeit veränderlich sein kann. Gründe hierfür sind das Altern des Gemisches, ein Verlust von Trägerfluid, üblicherweise Wasser, durch Verdampfung für die Druckkompensation oder ein folgendes Wiederauffüllen verlorener Trägerflüssigkeit mit Wasser und/oder Glykol. Hierdurch werden die thermischen Eigenschaften des Trägerfluids verändert, woraus wiederum ein unmittelbarer Einfluss auf den gemessenen Energieverbrauch folgt.

Um gewisse Zertifizierungen für Energiezählereinrichtungen zu erhalten, müssten derartige Veränderungen im Trägerfluid grundsätzlich kompensierbar sein bzw. zumindest berücksichtigt werden. Ein Ansatz könnte sein, jährlich die Glykolkonzentration zu überprüfen und entsprechend anzupassen, wenn die gemessene Konzentration um mehr als ein Prozent von der vorgegebenen Konzentration abweicht. Weiterhin kann vorgeschrieben werden, das Trägerfluid im Fall eines Druckabfalls im Temperierungskreislauf lediglich mit dem vorgegebenen Gemisch in dem vorgegebenen Mischungsverhältnis zu ergänzen.

Die Dichte $\rho$ und die spezifische Wärmekapazität $c_p$ weisen beide zudem eine Temperaturabhängigkeit auf, so dass auch der k-Faktor eine Temperaturabhängigkeit aufweist, die in Betracht gezogen werden muss. Allerdings ist die Temperatur des Trägerfluids bekannt, da die Temperaturdifferenz ohnehin vermessen werden muss, was üblicherweise durch eine Temperaturmessung im Vorlauf und im Rücklauf geschieht.

Zur Bestimmung des aktuellen k-Faktors des Trägerfluids wurde im Stand der Technik bereits vorgeschlagen, Messungen durchzuführen, beispielsweise kalorimetrische Messungen. Unter Verwendung des Zusammenhangs k = W/(V $\Delta$T) kann aus dem Temperaturanstieg $\Delta$T eines bekannten Volumens V einer Testflüssigkeit nach Erhitzung mit einer bekannten Energiemenge W unmittelbar ein Wert für k bestimmt werden. Ein derartiges Vorgehen ist beispielsweise in DE 10 2007 015 609 A1 möglich, bei welcher die dortige Messvorrichtung unter Berücksichtigung wenigstens eines von einem ihr zugeordneten, im Temperierungskreislauf angeordneten Sensormittel gegebenen Messparameters zur Bestimmung des k-Faktors des Gemischs und unter Berücksichtigung dieses zur Bestimmung des Energieverbrauchs ausgebildet ist.

Ein kalorimetrischer Ansatz ist in Energiezählereinrichtungen jedoch schwer umzusetzen, da der Einfluss der Umgebung und der Wärmeverlust an die Umgebung nicht vernachlässigt werden kann, diese beiden Einflüsse jedoch schwer zu definieren sind. Zudem würde der Einbau einer kalorimetrischen Messung in eine Energiezählereinrichtung, wie beispielsweise auch in EP 1 975 582 B1 vorgeschlagen wird, zu zusätzlichen Kosten führen. Neben dem kalorimetrischen Ansatz kann auch der Zusammenhang zwischen dem k-Faktor, der thermischen Leitfähigkeit $\lambda$ und der thermischen Diffusität a, k = $\lambda$/a, herangezogen werden, um den k-Faktor indirekt durch Messung von $\lambda$ und a zu bestimmen. Auch dies würde jedoch zusätzliche Sensorelemente in einer Energiezählereinrichtung und eine komplexe Messmethode erfordern.

EP 2 746 742 A1 betrifft eine Zählereinrichtung für thermische Energie, bei der die Konzentration einer Frostschutzsubstanz, insbesondere Glykol, in der der Trägerflüssigkeit gemessen wird, um weitere Eigenschaften der Trägerflüssigkeit zu bestimmen.

WO 2012/065 276 A1 betrifft ein Verfahren zur Bestimmung des Wärmeflusses eines wärmetransportierenden Fluids, welches ein Gemisch aus wenigstens zwei unterschiedlichen Fluiden ist, wobei die Dichte und die spezifische Wärme des wärmetransportierenden Fluids durch Messung der Schallgeschwindigkeit in dem Fluid bestimmt werden. Die Dichte und die spezifische Wärme werden dann genutzt, um den Wärmestrom zu bestimmen. Konkret wird dabei eine Messung der Temperaturdifferenz und der Schallgeschwindigkeit herangezogen, um die Konzentration des Frostschutzfluids, insbesondere Glykols, zu bestimmen.

Als Energiezählereinrichtungen wurden im Stand der Technik auch bereits solche vorgeschlagen, die den volumetrischen Durchfluss mittels einer Ultraschallmesseinrichtung bestimmen. Dabei kann beispielsweise vorgesehen sein, eine Messanordnung mit zwei Ultraschalltransducern zu verwenden, von denen einer stromaufwärts ausgerichtet ist, der andere stromabwärts, und sich die Transducer in einem bekannten Abstand gegenüber liegen. Aus den Laufzeitdifferenzen der Ultraschallsignale entlang der Strecke in beiden Richtungen lässt sich, insbesondere unter Verwendung eines Kennfelds, das durchgeflossene Volumen des Trägerfluids, mithin der Gemischdurchfluss, bestimmen. Bei mit solchen Laufzeitdifferenzen arbeitenden Energiezählereinrichtungen wird üblicherweise ein für das Referenzgemisch, für das die Energiezählereinrichtung vorgesehen ist, und die Energiezählereinrichtung oder zumindest deren relevanten Aufbau spezifisches Kennfeld verwendet. Das Kennfeld nutzt als Eingabedaten beispielsweise einen als Laufzeitdifferenz gemessenen Laufzeitdifferenzwert und die Temperatur des Gemischs am Ort der Laufzeitmessung, um als Ausgangsdatum einen Ermittlungsfaktor zu ermitteln. Durch Multiplikation des Ermittlungsfaktors mit dem Laufzeitdifferenzwert kann dann der Gemischdurchfluss bestimmt werden.

Wie bereits dargelegt wurde, kann es über die Zeit zu einer Änderung des Gemischs kommen und/oder bereits unmittelbar eine Abweichung von dem Referenzgemisch auftreten. Das bedeutet, die bezüglich der Ultraschallmessung genutzten fluiddynamischen Eigenschaften des Trägerfluids, also Gemischs, müssen nicht mehr zwangsläufig denen des Referenzgemischs, auf das sich das Kennfeld bezieht, entsprechen, so dass es bei der Auswertung der Laufzeitmessung zu Fehlern bei der Bestimmung des Gemischdurchflusses kommen kann. Im Gegensatz zu den Ansätzen hinsichtlich des k-Faktors gibt es im Stand der Technik noch keinen Lösungsansatz bezüglich dieses Problems.

Der Erfindung liegt daher die Aufgabe zugrunde, eine Möglichkeit zur genaueren Messung des Energieverbrauchs durch eine ultraschallbasierte Energiezählereinrichtung bei Abweichungen des verwendeten Trägerfluids von einem Referenzgemisch anzugeben.

Zur Lösung dieser Aufgabe ist bei einem Verfahren der eingangs genannten Art erfindungsgemäß vorgesehen, dass durch die Ultraschallmesseinrichtung auch eine aktuelle Schallgeschwindigkeit des Gemischs ermittelt wird, wobei die Bestimmung des Ermittlungsfaktors in Abhängigkeit von der aktuellen Schallgeschwindigkeit zur Korrektur einer Abweichung des Gemischs von dem Referenzgemisch erfolgt.

Im Rahmen der vorliegenden Erfindung wurde erkannt, dass die relevanten Änderungen in den fluiddynamischen Eigenschaften, die die Ultraschallmessung beeinflussen könnten und bei Abweichungen vom Referenzgemisch auftreten, durch die Schallgeschwindigkeit abgebildet werden können, so dass deren zusätzliche Bestimmung als Grundlage für eine zumindest teilweise Korrektur und somit genauere Gesamtmessung ausreichend ist. Dabei ist insbesondere in manchen Fällen, falls bestimmte Grundannahmen für ein Referenzgemisch bzw. erwartende Abweichungen zutreffend sind, eine äußerst einfache Korrektur nur aufgrund eines aus der Schallgeschwindigkeit gebildeten Korrekturfaktors ausreichend, während in anderen Fällen, insbesondere bei gewünschter genauerer Korrektur und/oder Nichtzutreffen wenigstens eines Teils der Grundannahmen Eingangsdaten in das Kennfeld modifiziert werden können, ggf. auch mittels eines aufgrund der Schallgeschwindigkeit ermittelten dynamischen Kennwerts. Allgemein kann man sagen, dass die Ermittlung des Ermittlungsfaktors in Abhängigkeit von der Schallgeschwindigkeit modifiziert wird.

Dabei besteht der Vorteil, dass das für das Referenzgemisch (und ggf. die Energiezählereinrichtung bzw. den Typ der Energiezählereinrichtung, insbesondere den Aufbau der Ultraschallmesseinrichtung) spezifische Kennfeld weiterhin verwendet werden kann. Es ist lediglich notwendig, zusätzlich die Schallgeschwindigkeit zu ermitteln, um unmittelbar aus dieser, insbesondere im Verhältnis zur Referenzschallgeschwindigkeit des Referenzgemischs, die Ermittlung des Ermittlungsfaktors zu modifizieren und/oder eine insbesondere weitere Modifizierung über einen mittels einer empirisch ermittelten Ermittlungsvorschrift aus der Schallgeschwindigkeit ableitbaren kinematischen Kennwert, insbesondere wiederum im Verhältnis zu dem entsprechenden und vorbekannten Referenzkennwert, vorzunehmen.

Die Schallgeschwindigkeit im aktuellen Gemisch kann dabei während des normalen Messvorgangs der Ultraschallmessvorrichtung, insbesondere sozusagen "on the fly", mitbestimmt werden, ohne dass hierdurch ein für Energiezählereinrichtungen zu hoher Aufwand entsteht. Insbesondere ist kein zusätzlicher Sensor nötig. Die Schallgeschwindigkeit kann aus einem Mittelwert oder einer Summe eines Laufzeitwerts einer Stromabwärts-Messung und eines Laufzeitwerts einer Stromaufwärts-Messung bei zwei in Flussrichtung gegenüberliegenden Ultraschalltransducern und/oder aus einer Messung bei unbewegtem Gemisch ermittelt werden. Insbesondere bietet sich in diesem Zusammenhang eine Messanordnung, wie bereits oben beschrieben, an, bei der in einem das Trägerfluid führenden Gefäß zwei Ultraschalltransducer angeordnet werden, die sich in Strömungsrichtung in einem bekannten Abstand versetzt gegenüberliegen, so dass eine Stromaufwärts-Messung und eine Stromabwärts-Messung möglich sind. Nachdem der Abstand zwischen dem sendenden Ultraschalltransducer und dem empfangenden Ultraschalltransducer bekannt ist, lässt sich die Schallgeschwindigkeit mit einer einfachen Messung der Laufzeit bei nicht bewegtem Gemisch ermitteln, oder aber, falls ein Fluss vorhanden ist, aus der Summe bzw. dem Mittelwert der Laufzeiten der Stromaufwärts- und der Stromabwärts-Messung. Auf diese Weise fallen flussinduzierte Effekte heraus. Microcontroller, die sowohl die absolute Laufzeit als auch Laufzeitdifferenzen für Zähleranwendungen bestimmen, sind im Stand der Technik bereits bekannt, beispielsweise von Texas Instruments unter der Seriennummer "TI MPS430FR6047".

Nachdem ferner auch die oben beschriebenen, die Genauigkeit des Gemischdurchflusses und somit des Energieverbrauchs erhöhenden Modifikationen bei der Ermittlung des Ermittlungsfaktors elektronisch einfach umsetzbar sind, ist das erfindungsgemäße Vorgehen hinsichtlich des Energieverbrauchs und der Komplexität der Elektronik ebenso vorteilhaft.

Ferner ist es im Rahmen der vorliegenden Erfindung vorteilhaft nicht notwendig, das Mischungsverhältnis im Trägerfluid, also aktuellen Gemisch, zu bestimmen, wobei ferner andere Eigenschaften des Trägerfluids unbekannt bleiben können. Dies vereinfacht die abweichungskompensierte Bestimmung des Gemischdurchflusses deutlich.

Die zur vorliegenden Erfindung führenden Erkenntnisse sollen im Folgenden genauer beschrieben werden, ebenso, unter welchen Annahmen sich Vereinfachungen ergeben bzw. umsetzen lassen. Die Feststellung, dass eine reine zusätzliche Messung der Schallgeschwindigkeit ausreichend ist, um Effekte der Abweichung des aktuellen Gemischs vom Referenzgemisch zumindest teilweise zu kompensieren, basiert auf einer Auswertung, Zusammenschau und Ergebnisanalyse einer Vielzahl von Messergebnissen als Messpunkte bzw. Datenpunkte, die diese Datenpunkte letztlich empirisch betrachtet und zunächst überraschend feststellt, dass ein zumindest hinsichtlich bestimmter Zusammensetzungen des Gemischs/Referenzgemischs bzw. Gruppen solcher eindeutiger Zusammenhang zwischen der Schallgeschwindigkeit und den relevanten fluiddynamischen (und teilweise auch statischen) Eigenschaften, beschrieben durch Kennwerte, besteht.

Dabei sei zunächst eine Notation festgelegt, die im Folgenden verwendet werden soll. Abgeleitete Eigenschaften/Größen des Gemischs (Trägerfluids) werden einfach gestrichen dargestellt, während der Index "r" bekannte Eigenschaften des Referenzgemischs, das der Kalibrierung (also dem Kennfeld) zugrunde liegt, kennzeichnet. Typischerweise kann es sich bei den Grundkomponenten des Referenzgemischs beispielsweise um Wasser und ein bestimmtes Glykol handeln. Allgemein kann für die vorliegende Erfindung gesagt werden, dass das Referenzgemisch eine vorgegebene Referenzzusammensetzung aufweist, insbesondere vorgegebene Grundkomponenten, beispielsweise Wasser und ein bestimmtes Glykol, und zudem durch deren Referenzmischungsverhältnis definiert ist.

Bei der Ultraschall-Energiezählereinrichtung gilt ferner:

- Die Ermittlung des Gemischdurchflusses basiert auf einer Laufzeitmessung, in der die Laufzeitdifferenz $\Delta t$ entlang eines Ultraschallpfades in Stromaufwärts-Richtung und Stromabwärtsrichtung gemessen wird: $\Delta t = t_{ups} - t_{dns}$
- Nachdem die Temperaturdifferenz zwischen Vorlauf und Rücklauf $\Delta T = T_{in} - T_{our}$ gemessen werden muss, ist auch die absolute Temperatur des aktuellen Gemischs an der Stelle der Laufzeitmessung bekannt.
- Wie oben beschrieben, kann durch die Betrachtung der absoluten Laufzeit/Summenlaufzeit bei bekannter Laufstrecke des Ultraschallsignals die Schallgeschwindigkeit $c_f'$ des aktuellen Gemisches ermittelt werden.

Wie bereits oben beschrieben, kann zur Ermittlung des Gemischdurchflusses insbesondere vorgesehen sein, dass die gemessene Zeitdifferenz $\Delta t$ mit einem aus einem Kennfeld als Ausgangsdatum bestimmbaren Ermittlungsfaktor multipliziert wird, wobei als Eingangsdaten in das Kennfeld beispiels- und üblicherweise die Zeitdifferenz $\Delta t$ und die absolute Temperatur T am Ort der Laufzeitmessung eingehen, mithin für das Kennfeld und den als Ausgangsdatum des Kennfelds beim Referenzgemisch bestimmten Ermittlungsfaktor $k (\Delta t, T)$ geschrieben werden kann. Bezeichnet man den Gemischdurchfluss als Q, so gilt also für das Referenzgemisch $Q = k_r(\Delta t, T) \cdot \Delta t$.

Wie bereits dargelegt wurde, entspricht das aktuelle Gemisch aber nicht immer dem Referenzgemisch, da Änderungen im Trägerfluid auftreten können, die einen Einfluss auf die relevanten dynamischen Eigenschaften der Fluiddynamik haben können, so dass Fehler in der Ermittlung des Gemischdurchflusses auftreten können. Relevante Eigenschaften des Gemischs umfassen dabei beispielsweise die Dichte und die dynamische Viskosität, woraus sich die kinematische Viskosität ermitteln lässt.

Wie die Auswertung von Messergebnissen ergeben hat, lässt sich ein empirischer Zusammenhang herleiten, über den sich die Dichte $\rho'$, die dynamische Viskosität $\mu'$ und/oder die kinematische Viskosität $v' = \mu'/\rho'$ des aktuellen Gemischs aus der Schallgeschwindigkeit $c_f'$ und der Temperatur T ableiten lässt. Mit anderen Worten lässt sich eine empirische Ermittlungsvorschrift ermitteln, die es erlaubt, einen insbesondere kinematischen Kennwert aus der Schallgeschwindigkeit und der Temperatur herzuleiten.

Erfindungsgemäß kann mithin vorgesehen sein, dass wenigstens ein insbesondere fluiddynamischer Kennwert des Gemischs, insbesondere die Dichte und/oder die dynamische Viskosität und/oder die kinematische Viskosität und/oder eine zu einer der genannten Größen proportionale Größe, in Abhängigkeit von der Schallgeschwindigkeit und der Temperatur des Gemischs aufgrund einer empirisch ermittelten Ermittlungsvorschrift ermittelt und bei der Ermittlung des Ermittlungsfaktors verwendet wird. Die empirisch, insbesondere durch Auswertung von Messergebnissen und/oder Simulationsergebnissen, ermittelte Ermittlungsvorschrift setzt die Temperatur und die Schallgeschwindigkeit in unmittelbarem Zusammenhang zu dem Kennwert, welcher mithin auf einfache Art und Weise direkt ermittelt werden kann.

Zur Ermittlung der Ermittlungsvorschrift können Datenpunkte, die aus Messungen und/oder Simulationen gewonnen wurden, herangezogen werden, wobei Messergebnisse bevorzugt eingesetzt werden. Konkret kann vorgesehen sein, dass als Ermittlungsvorschrift eine Look-Up-Tabelle und/oder ein mathematischer Zusammenhang ermittelt wird. Die Ermittlungsvorschrift kann durch einen Fit an Mess- und/oder Simulationspunkte (zusammenfassend Datenpunkte), insbesondere mittels der Methode der kleinsten Quadrate, ermittelt werden. Dabei bietet sich eine Look-Up-Tabelle besonders an, da diese elektronisch in der Energiezählereinrichtung einfach umgesetzt werden kann.

Dabei hat sich bei Untersuchungen im Rahmen der vorliegenden Erfindung gezeigt, dass besonders genaue Ermittlungsvorschriften für den Kennwert dann ermittelt werden können, wenn eine spezielle Zusammensetzung des Gemischs, mithin eine bestimmte Kombination von Grundkomponenten, betrachtet wird, mithin die das Trägerfluid bildenden einzelnen Fluide bekannt sind. Mit besonderem Vorteil kann im Rahmen der vorliegenden Erfindung mithin vorgesehen sein, dass bei der Ermittlung des Kennwerts zusätzlich eine Fluidinformation, die wenigstens eines der Fluide, insbesondere das Glykol bei Wasser als weiterem Fluid, des Gemisches identifiziert, berücksichtigt wird, insbesondere eine für das Fluid bzw. die Fluidkombination spezifische Ermittlungsvorschrift verwendet wird. Insbesondere beschreibt die Fluidinformation mithin die Zusammensetzung des Gemischs, hier Referenzgemischs. Auch wenn mithin ein unzweideutiger Zusammenhang zwischen der Schallgeschwindigkeit, der Temperatur und dem Kennwert für alle denkbaren Fluide oder sogar für alle denkbaren Glykole in einem Wasser-Glykol-Gemisch nicht existieren mag, hat sich jedoch gezeigt, dass für jede Gruppe von Datenpunkten, die derselben Gemischzusammensetzung, mithin denselben Grundkomponenten, insbesondere Wasser und Glykol, zugeordnet sind, ein unzweideutiger Zusammenhang, mithin eine eindeutige Ermittlungsvorschrift, zwischen der Schallgeschwindigkeit, der Temperatur und dem Kennwert herleiten lässt, so dass eine äußerst genaue Bestimmung des Kennwerts möglich ist. Dabei hat sich gezeigt, dass sich eine Zunahme des Glykolanteils in einem Wasser-Glykol-Gemisch in einer Erhöhung der Schallgeschwindigkeit und einer Erhöhung der Viskositäten äußert. Dabei sei an dieser Stelle noch angemerkt, dass unter der Gemischzusammensetzung vorliegend nur die Kenntnis der Grundkomponenten verstanden werden soll, nicht jedoch konkrete Konzentrationen/-Mischungsverhältnisse.

Sind im Rahmen der vorliegenden Erfindung also die Grundkomponenten des Trägerfluids, mithin des Gemischs, bekannt, insbesondere die Art von Glykol, welches zusammen mit Wasser verwendet wird, kann der insbesondere dynamische Kennwert des aktuellen Gemischs unter Verwendung der entsprechenden Ermittlungsvorschrift hochgenau in Abhängigkeit von der gemessenen Schallgeschwindigkeit und der Temperatur bestimmt werden, ohne dass ein genaues Wissen über das Mischungsverhältnis benötigt wird.

In Weiterbildung der Erfindung kann vorgesehen sein, dass die Fluidinformation und/oder die für die Fluidinformation spezifische Ermittlungsvorschrift vor oder bei Inbetriebnahme der Energiezählereinrichtung in einem Speichermittel der Recheneinrichtung hardcodiert wird. Mit anderen Worten kann beispielsweise die Information über ein verwendetes Glykol in die Firmware der Energiezählereinrichtung hardcodiert werden, mithin dort unveränderbar eingespeichert werden. Auf diese Weise ist ein besonders hoher Schutz vor Manipulationsmaßnahmen, beispielsweise durch den Verbraucher thermischer Energie, gegeben.

Mithin kann es im Rahmen der vorliegenden Erfindung alternativ auch vorgesehen sein, dass die Fluidinformation über ein Eingabemittel der Energiezählereinrichtung oder eine Kommunikationsschnittstelle der Energiezählereinrichtung empfangen wird. Beispielsweise ist es denkbar, die Art von Glykol bzw. anderer Komponenten des Gemischs bei Einbau bzw. Installation der Energiezählereinrichtung und/oder während einer Wartung auszuwählen. Hierzu können geeignete Kommunikationsschnittstellen und/oder Eingabemittel an der Energiezählereinrichtung verwendet werden. Zweckmäßig ist es in diesem Zusammenhang jedoch, wenn wenigstens eine Sicherheitsmaßnahme zur Verhinderung von Manipulationsversuchen bezüglich der Fluidinformation durch den Endbenutzer angewendet wird, beispielsweise eine Codierung, Verschlüsselung und/oder die Verwendung geeigneter Passwörter und/oder sonstiger Authentifizierungsmittel. Auf diese Weise kann vermieden werden, dass der Endbenutzer gezielt eine Gemischzusammensetzung, beispielsweise ein Glykol, auswählt, das zu einer Ermittlung niedrigerer Energieverbräuche führen würde.

In alternativer Ausgestaltung der vorliegenden Erfindung ist es im Rahmen des Verfahrens jedoch auch möglich, dass die Ermittlungsvorschrift aus empirischen Ergebnissen für eine Gruppe umfassend wenigstens zwei unterschiedliche Gemischzusammensetzungen, insbesondere mehrere unterschiedliche Glykole im Glykol-Wasser-Gemisch, ermittelt wird. Eine Energiezählereinrichtung mit einer Art universellerer, also gemischunabhängiger, Kennwert-Ermittlung kann umgesetzt werden, wenn ein gemeinsamer, temperaturabhängiger Zusammenhang zwischen der Schallgeschwindigkeit und dem Kennwert angenommen wird. Dieser Zusammenhang und mithin die Ermittlungsvorschrift kann aufgefunden werden, indem beispielsweise ein Fit nach der Methode der kleinsten Quadrate für alle relevanten, also die Gruppe betreffenden Datenpunkte durchgeführt wird. Letztlich wird also ein "mittlerer" Verlauf angenommen. Dabei sei jedoch darauf hingewiesen, dass eine hierbei herangezogene Gruppe unterschiedlicher Zusammensetzungen des Gemischs nicht alle denkbaren Zusammensetzungen des Gemisches zwangsläufig umfassen muss, sondern beispielsweise Wasser-Glykol-Gemische, die ein äußerst ähnliches Verhalten zeigen, zusammengefasst werden können, so dass Energiezählereinrichtungen für diese Gruppen von unterschiedlichen Zusammensetzungen des Gemischs geschaffen werden können. Ein bestimmender Faktor bei der Zusammenstellung derartiger Gruppen kann sein, dass eine gewisse Genauigkeit in der Bestimmung des Kennwerts gefordert wird. Auf diese Weise können mithin Gruppen gewählt werden, deren Datenpunkte bzw. Verläufe in einem hinreichend engen Bereich beieinander liegen, um dennoch eine hinreichend genaue Bestimmung des Kennwerts für die angeforderten Zwecke, beispielsweise hinsichtlich einer Zertifizierung der Energiezählereinrichtung, zu erlauben. Beispielsweise kann wenigstens eine Gruppe unterschiedlicher Zusammensetzungen des Gemischs aufgrund einer Vorgabe einer Genauigkeit zur Bestimmung des Kennwerts zusammengestellt werden, beispielsweise für eine Genauigkeit von 1 %. Für eine die Gruppe der wenigstens zwei unterschiedlichen Zusammensetzungen beschreibende Gruppeninformation kann wie oben bezüglich der Fluidinformation vorgegangen werden; zudem kann anhand einer Fluidinformation die Zugehörigkeit zu einer Gruppe überprüft werden.

Zusammenfassend ist es also zunächst möglich, die folgenden Größen zu bestimmen: $T$, $\Delta t$, $c_f'$, $\rho'$, $\mu'$, $v'$. Zudem ist das Kennfeld für das Referenzgemisch, $k_r(\Delta t, T)$, bekannt, welches für die Referenzgrößen $c_f$ $\rho_r$ $\mu_r$ $v_r$ bestimmt wurde, insbesondere im Rahmen eines Kalibrierungsvorgangs. Zur Bestimmung des Gemischdurchflusses $Q'$ bei von einem Referenzgemisch abweichendem Trägerfluid wurden folgende Überlegungen durchgeführt.

Im Allgemeinen kann geschrieben werden, dass $Q' = k'(\Delta t, T) \cdot \Delta t$. Allerdings ist das Kennfeld $k'(\Delta t, T)$ für das aktuelle Gemisch unbekannt. Um dennoch einen Weg zu finden, eine zumindest teilweise Kompensation der Abweichung von dem Referenzgemisch zu erlauben, sollen die Beiträge der Schallgeschwindigkeit und des Flussprofils in dem Kennfeld voneinander getrennt werden. Hierzu wird von der generellen Näherung für $\Delta t$ ausgegangen, die gilt, wenn die mittlere Geschwindigkeit des Gemischs deutlich niedriger als die Schallgeschwindigkeit angenommen werden kann:

$$\Delta t \approx 2L\bar{v}_Q/c_f^2 \tag{2}$$

Dabei bezeichnet $\bar{v}_Q = \overline{Q}/A$ die mittlere Flussgeschwindigkeit im durch die Laufzeitmessung vermessenen Volumen mit Querschnitt A, wobei $\overline{Q}$ den mittleren Fluss in diesem Volumen bezeichnet. Nur für eine Pfropfenströmung (plug flow) oder andere, sehr spezielle Umstände findet sich $\overline{Q} = Q$, wo Q den wahren Fluss bezeichnet.

Für das Kennfeld kann, mit der Länge der Messstrecke L, mithin geschrieben werden, dass

$$k_r(\Delta t, T) = \frac{Q}{\Delta t} = \frac{Q}{2L\bar{v}_Q} c_f^2 = \frac{Q}{\overline{Q}} \frac{A}{2L} c_f^2 \equiv \tilde{k}_r(Re)c_f^2 \;, \tag{3}$$

wobei das reduzierte Kennfeld

$$\tilde{k}_r(Re) = \frac{Q}{\overline{Q}} \frac{A}{2L} \tag{4}$$

nun die Abhängigkeit von der Fluiddynamik enthält, die als reine Abhängigkeit von der Reynolds-Zahl Re ausgedrückt werden kann. Entsprechend kann geschrieben werden

$$\tilde{k}'(Re') = \tilde{k}_r(Re') \;. \tag{5}$$

Dieser Zusammenhang kann ausgenutzt werden, um einen Zusammenhang zwischen dem unbekannten Kennfeld für das aktuelle Gemisch und dem bekannten Kennfeld für das Referenzgemisch herzuleiten:

$$Q' = k'(\Delta t, T) \cdot \Delta t = \tilde{k}'(\Delta t, T)c_f'^2 \cdot \Delta t = \tilde{k}'(Re')c_f'^2 \cdot \Delta t = \tilde{k}_r(Re')c_f'^2 \cdot \Delta t \;. \tag{6}$$

Dabei besteht allerdings das Problem, dass das reduzierte Kennfeld $\tilde{k}_r(Re)$ nur mit der Laufzeitdifferenz $\Delta t$ als Eingangsdatum bekannt ist, also als $\tilde{k}_r(\Delta t)$, nicht aber mit der Reynolds-Zahl als Eingangsdatum. Daher muss ein Ausdruck gefunden werden, der den Zusammenhang $\Delta t = \Delta t(Re') \equiv \Delta \tau$ herstellt, der in dem Kennfeld des Referenzgemischs zur Bestimmung des aktuellen Gemischdurchflusses herangezogen werden kann:

$$Q' = \tilde{k}(Re')c_f'^2 \cdot \Delta t = \tilde{k}(\Delta \tau, T)c_f'^2 \cdot \Delta t \;, \tag{7}$$

wobei $\Delta\tau$ bislang unbekannt ist.

Geht man von der allgemeinen Definition der Reynolds-Zahl Re mit der Dichte $\rho$, dem hydraulischen Durchmesser $D_h$, der lokalen Flussgeschwindigkeit $v_f$ (mit $v_f \approx Q/A$) und der dynamischen Viskosität $\mu$ aus, erhält man

$$Re = \frac{\rho D_h v_f}{\mu} = \frac{\rho D_h}{\mu A} \cdot Q = \frac{\rho D_h}{\mu A} \cdot k(\Delta t, T) \cdot \Delta t = \frac{\rho D_h}{\mu A} \cdot \tilde{k}(\Delta t, T) c_f^2 \cdot \Delta t \ . \qquad (8)$$

Für das Referenzgemisch, für das das Kennfeld bekannt ist, gilt also:

$$Re_r = \frac{\rho_r D_h}{\mu_r A} \cdot \tilde{k}_r(\Delta t, T) c_f^2 \cdot \Delta t \qquad (9)$$

und umgeschrieben

$$\Delta t(Re_r) = \frac{\mu_r A}{\rho_r D_h} \frac{Re_r}{\tilde{k}_r(\Delta t, T) c_f^2} \ . \qquad (10)$$

Die gemessene Laufzeitdifferenz für die Reynolds-Zahl des aktuellen Gemischs in Abhängigkeit des bekannten Kennfelds für das Referenzgemisch kann also ausgedrückt werden als

$$\Delta\tau \equiv \Delta t(Re') = \frac{\mu_r A}{\rho_r D_h} \frac{Re'}{\tilde{k}_r(\Delta t, T) c_f^2} = \frac{Re'}{Re_r} \Delta t \ . \qquad (11)$$

Entsprechend muss das Verhältnis der Reynolds-Zahlen bestimmt werden, um den Gemischdurchfluss zu berechnen. Unter der Annahme, dass das Kennfeld für das Referenzgemisch verwendet werden kann, um die aktuelle Flussgeschwindigkeit $v_f'$ zu berechnen, erhält man

$$v_f' = Q'/A = \tilde{k}'(\Delta t, T) c_f'^2 \Delta t/A \approx \tilde{k}_r(\Delta t, T) c_f'^2 \cdot \underbrace{\frac{c_f^2}{c_f^2}}_{1} \cdot \Delta t/A = k_r(\Delta t, T) \frac{c_f'^2}{c_f^2} \cdot \Delta t/A \ , \qquad (12)$$

was verwendet werden kann, um

$$Re' = \frac{\rho' D_h}{\mu'} v_f' \approx \frac{\rho' \cdot D_h}{\mu' \cdot A} \frac{c_f'^2}{c_f^2} k_r(\Delta t, T) \cdot \Delta t = \frac{\rho'}{\rho_r} \frac{\mu_r}{\mu'} \frac{c_f'^2}{c_f^2} Re_r \qquad (13)$$

zu erhalten. Der Zusammenhang (13) kann in der Gleichung (11) genutzt werden, so dass sich für den Gemischdurchfluss Q', welcher nun nur noch von bekannten und wie beschrieben ermittelbaren Größen abhängt, ergibt:

$$Q' = \tilde{k}(\Delta\tau, T) c_f'^2 \cdot \Delta t = k_r(\Delta\tau, T) \frac{c_f'^2}{c_f^2} \cdot \Delta t = k_r\left(\frac{\rho'}{\rho_r} \frac{\mu_r}{\mu'} \frac{c_f'^2}{c_f^2} \Delta t, T\right) \frac{c_f'^2}{c_f^2} \cdot \Delta t \qquad (14)$$

und somit

$$Q' = k_r\left(\frac{v_r}{v'} \frac{c_f'^2}{c_f^2} \Delta t, T\right) \frac{c_f'^2}{c_f^2} \cdot \Delta t \ . \qquad (15)$$

Wie oben beschrieben nutzt diese Herleitung die Näherung, dass das Kennfeld des Referenzgemischs herangezogen werden kann, um die Flussgeschwindigkeit des tatsächlichen, aktuellen Gemischs zu ermitteln. Mit anderen Worten wird angenommen, dass für typische Veränderungen des Trägerfluids gegenüber dem Referenzgemisch, beispielsweise für übliche Änderungen der Glykolkonzentration im Feldeinsatz, die mittlere Flussgeschwindigkeit im Messvolumen der Ultraschallmessung, $\overline{v}_Q \approx Q/A$, sich nicht verändert. Dies impliziert, dass das Flussprofil bei einem bestimmten Durchfluss Q und einer bestimmten Temperatur T unabhängig von Materialeigenschaften des Fluids, wie $\rho$, $\mu$

und/oder v wäre. Für ein konstantes Flussprofil (Pfropfenströmung -"plug flow"), unabhängig von den Materialeigenschaften) trifft diese Annahme zu. Für alle anderen Flussprofile führen jedoch Änderungen in Viskosität und Dichte zu (kleineren) Änderungen des Flussprofils. Üblicherweise ist allerdings nicht das gesamte Flussprofil (über das Gefäß, durch das das Gemisch bei der Laufzeitmessung strömt) in dem Messvolumen enthalten. Dies bildet sich auch auf die (dann gering anzunehmende) Flussprofilabhängigkeit des Kennfelds ab. Eine Änderung des Flussprofils bei Verwendung eines ungeänderten Kennfelds (für das Referenzgemisch) führt also zu einem kleinen Fehler in der Durchflussbestimmung.

Zusammenfassend und allgemein formuliert kann bezüglich Gleichung (15) also formuliert werden, dass die Schallgeschwindigkeit und/oder der dynamische Kennwert zur Modifikation des als Eingangsdatum in das vorgegebene Kennfeld eingehenden Laufzeitdifferenzwerts und/oder die Schallgeschwindigkeit zur Modifikation des von dem Kennfeld ausgegebenen Ausgangswerts, insbesondere durch Multiplikation, verwendet werden können. Wie ersichtlich diese Formulierung andeutet, können weitere Überlegungen zu Näherungen dazu führen, dass nicht alle dieser Modifikationen zu einer wenigstens teilweisen Kompensation der Abweichung von dem Referenzgemisch notwendig werden.

Betrachtet man die Messergebnisse, die der empirischen Ermittlung der Ermittlungsvorschrift zugrunde gelegt werden können oder auch die Ermittlungsvorschrift als solche für handelsübliche Glykole, können für eine Größenabschätzung zwei Ansätze gewählt werden, nämlich als erster Fall, dass Unsicherheiten bezüglich der Gemischzusammensetzung, also insbesondere des Glykols, vorliegen. Dieser erste Fall ist im Feld oft weniger relevant. Als zweiter Fall kann von Unsicherheiten im Mischungsverhältnis, also insbesondere der Konzentration des Glykols, ausgegangen werden.

Für den ersten Fall, also zu erwartende Unsicherheiten bezüglich der Gemischzusammensetzung, kann aus Messdaten abgeschätzt werden, dass der maximal zu erwartende Wert für den Modifikationsfaktor $v_r/v$' etwa 1,05 bei 20 °C betragen dürfte. Der größere Einfluss ist im ersten Fall durch die Schallgeschwindigkeit gegeben, da der entsprechende Modifikationsfaktor $c_f'^2/c_f^2$ im Bereich bis zu 1,32 liegen sollte.

Eine Korrekturoption wäre daher im ersten Fall auch gegeben, wenn der Einfluss der veränderten kinematischen Viskosität auf die Fluiddynamik vernachlässigt wird, so dass die Modifikation nur für Variationen der Schallgeschwindigkeit umgesetzt wird. Mit anderen Worten fiele dann der oben erwähnte erste Modifikationsfaktor in Gleichung (15) weg, $v_r/v$' ≈ 1, und nur der zweite Modifikationsfaktor $c_f'^2/c_f^2$ würde verwendet. Dann wäre insbesondere

$$\Delta\tau = \frac{c_f'^2}{c_f^2} \cdot \Delta t \ , \tag{16}$$

was zu größeren Fehlern in der Durchflussbestimmung führen kann. Denn mit den oben genannten Annahmen zu der Größe der beiden Modifikationsfaktoren und deren Einsatz zur Modifikation der Eingangsdaten in das Kennfeld hängt der entstehende Fehler von der Form des Kennfelds, insbesondere dessen lokaler Steigung ab. Für ein weitgehend bzw. annähernd konstantes Kennfeld würden sich die Fehler, die durch Vernachlässigung der Viskosität, also des ersten Modifikationsfaktors, auftreten, linear in einen Fehler in der Durchflussbestimmung fortsetzen. Für ein stark variierendes Kennfeld mit hohen lokalen Steigungen allerdings kann sich dieser Fehler deutlich erhöhen. Es sei angemerkt, dass sich die Abweichungen in Schallgeschwindigkeit und Viskosität mit höheren Temperaturen erniedrigen, so dass auch der Maximalfehler reduziert wird. Es wäre also anhand der Form des jeweiligen Kennfelds, insbesondere auch Energiezählereinrichtungsspezifisch bzw. aufbauspezifisch, zu entscheiden, ob der entstehende Fehler vertretbar ist; grundsätzlich ist diese Näherung jedoch denkbar.

In einer leicht vereinfachten Variante für den ersten Fall kann auch angedacht werden, die Modifikation der Eingangsdaten für das Kennfeld gänzlich zu unterlassen, $\Delta\tau = \Delta t$, und den zweiten Modifikationsfaktor nur auf das Ausgangsdatum anzuwenden. Diesbezüglich wäre allerdings aus den dargelegten Gründen eine eher minderwertige Korrektur zu erwarten.

Für den zweiten Fall ergibt sich durch Analyse von Messdaten in der Fehlerabschätzung eher das gegenteilige Bild. Betrachtet man die Abhängigkeit der kinematischen Viskosität vom Mischungsverhältnis, beispielsweise eine Änderung einer Glykolkonzentration von 5% bei einem bekannten Glykol, ergibt sich für das Glykol Tyfocor L eine Veränderung der kinematischen Viskosität von ca. 20% (bei 20 °C von 35% Tyfocor L zu 40% Tyfocor L). Hinsichtlich der Schallgeschwindigkeit beträgt die Änderung bei gleicher Ausgangslage (Änderung der Tyfocor L-Konzentration um 5%) jedoch nur etwa 2% (bei 20 °C und **35%/40%,** so dass der zweite Modifikationsfaktor $c_f'^2/c_f^2$ 1,02 betragen würde). Dies wird auch für andere Glykole so beobachtet.

Eine denkbare Näherung für den zweiten Fall wäre also allenfalls, den zweiten Modifikationsfaktor als etwa 1 anzunehmen, allerdings ist die aktuelle Schallgeschwindigkeit durch die Ultraschallmessung leicht bestimmbar, so dass ein Nutzen des vollständigen Zusammenhangs, Gleichung (15), die genaueste, robusteste und zweckmäßigste Variante darstellt.

Zusammengefasst würde eine besonders bevorzugte Ausgestaltung der vorliegenden Erfindung vorsehen, dass die kinematische Viskosität und/oder ein dynamischer Kennwert, aus dem die kinematische Viskosität ermittelbar ist, in Abhängigkeit von der Schallgeschwindigkeit aufgrund einer empirisch, insbesondere für eine bestimmte Gemischzusammensetzung, ermittelten Ermittlungsvorschrift ermittelt wird, wobei der Ermittlungsfaktor bestimmt wird, indem

- ein Eingangsdatum durch Multiplikation des Laufzeitdifferenzwerts mit dem Verhältnis der kinematischen Referenzviskosität des Referenzgemischs zu der kinematischen Viskosität (erster Modifikationsfaktor) und dem Verhältnis des Quadrats der Schallgeschwindigkeit zu dem Quadrat der Referenzschallgeschwindigkeit des Referenzgemischs (zweiter Modifikationsfaktor) ermittelt wird und
- ein unter Verwendung des Eingangsdatums in das vorgegebene Kennfeld ermittelter Ausgangswert mit dem Verhältnis des Quadrats der Schallgeschwindigkeit zu dem Quadrat der Referenzschallgeschwindigkeit des Referenzgemischs (zweiter Modifikationsfaktor) multipliziert wird.

Die Nutzung einer für die Gemischzusammensetzung des Referenzgemischs, also dessen Grundkomponenten, spezifischen Ermittlungsvorschrift oder zumindest einer sehr eng gefassten Gruppe von Gemischzusammensatzungen, die auch die Gemischzusammensetzung des Referenzgemischs umfasst, ist dabei bevorzugt.

Die oben diskutierte Näherung für den ersten Fall (Wegfall des ersten Modifikationsfaktors) würde zu einer, insbesondere sinnvoll bei "flachen" Kennfeldern und genau bekannten Mischungsverhältnissen, aber Unsicherheiten in der Gemischzusammensetzung einsetzbaren, Ausführungsform führen, in der keine Ermittlungsvorschrift notwendig wäre, sondern nur vorgesehen wäre, dass der Ermittlungsfaktor bestimmt wird, indem

- ein Eingangsdatum durch Multiplikation des Laufzeitdifferenzwerts mit dem Verhältnis des Quadrats der Schallgeschwindigkeit zu dem Quadrat der Referenzschallgeschwindigkeit des Referenzgemischs (zweiter Modifikationsfaktor) ermittelt wird und
- ein unter Verwendung des Eingangsdatums in das vorgegebene Kennfeld ermittelter Ausgangswert mit dem Verhältnis des Quadrats der Schallgeschwindigkeit zu dem Quadrat der Referenzschallgeschwindigkeit des Referenzgemischs (zweiter Modifikationsfaktor) multipliziert wird.

Dieser Fall ist im Feld, wo die verwendeten Grundkomponenten, insbesondere ein verwendetes Glykol, meist gut bekannt sind und vor allem Unsicherheiten in der Konzentration korrigiert werden sollen, voraussichtlich weniger relevant.

Ferner ist im ersten Fall, eher in äußerst seltenen Fällen anwendbar, auch noch denkbar, die Eingangsdaten in das Kennfeld unverändert zu belassen und lediglich den Ausgangswert mit dem Verhältnis des Quadrats der Schallgeschwindigkeit zu dem Quadrat der Referenzschallgeschwindigkeit des Referenzgemischs (zweiter Modifikationsfaktor) zu multiplizieren.

Im zweiten Fall, also bei genau bekannter Gemischzusammensetzung, aber Unsicherheiten im Mischungsverhältnis, ergäbe sich dann, wenn eine Näherung gewünscht ist, dass der Ermittlungsfaktor bestimmt wird, indem ein Eingangsdatum durch Multiplikation des Laufzeitdifferenzwerts mit dem Verhältnis der kinematischen Referenzviskosität des Referenzgemischs zu der kinematischen Viskosität (erster Modifikationsfaktor) ermittelt wird. Auf weitere Modifikationen würde dann verzichtet.

Es sei angemerkt, dass, wie eingangs angemerkt, auch der k-Faktor bei der Ermittlung des Energieverbrauchs abhängig von einer Abweichung von dem Referenzgemisch schwanken kann. Daher ist in einer besonders vorteilhaften Weiterbildung der vorliegenden Erfindung zusätzlich vorgesehen, dass durch die Recheneinrichtung aus der Schallgeschwindigkeit und der von der Temperaturmesseinrichtung gemessenen Temperatur des Gemischs aufgrund einer empirisch ermittelten Bestimmungsvorschrift unmittelbar der k-Faktor ermittelt wird.

Denn es wurde durch Untersuchungen verschiedenster Messreihen und Messergebnisse zusätzlich festgestellt, dass ein zur hinreichend genauen Bestimmung des k-Faktors geeigneter, unmittelbarer Zusammenhang zwischen der Schallgeschwindigkeit, der Temperatur und dem k-Faktor besteht. Wird beispielsweise die Temperaturabhängigkeit des k-Faktors und die Temperaturabhängigkeit der Schallgeschwindigkeit vermessen, können diese Datensätze als miteinander verbunden angenommen werden, so dass dann, wenn die Schallgeschwindigkeit gemessen wird, diese auch bezüglich des k-Faktors interpretiert werden kann.

Mit anderen Worten wird in dieser Ergänzung vorgeschlagen, auch den k-Faktor basierend auf der Messung der Schallgeschwindigkeit im Trägerfluid zu bestimmen. Die empirisch, insbesondere durch Auswertung von Messergebnissen und/oder Simulationsergebnissen, ermittelte Bestimmungsvorschrift setzt die Temperatur und die Schallgeschwindigkeit in unmittelbarem Zusammenhang zu dem k-Faktor, welcher mithin auf einfache Art und Weise direkt ermittelt werden kann. In dieser Ausführungsform ist auch für die k-Faktor-Bestimmung kein zusätzlicher Sensor notwendig.

Ferner ist es dann vorteilhaft nicht notwendig, das Mischungsverhältnis im Trägerfluid zu bestimmen, wobei ferner die Dichte und die spezifische Wärmekapazität des Gemischs unbekannt bleiben können. Dies vereinfacht die Bestimmung des Wärmeflusses deutlich. Zusammenfassend wird zusätzlich eine empirische Korrelation zwischen dem k-Faktor und der Schallgeschwindigkeit in dem Trägerfluid herangezogen, welche Schallgeschwindigkeit weiterhin auf einfache Weise als Nebenprodukt einer ultraschallbasierten Durchflussmessung bestimmt werden kann.

Bezüglich der Bestimmungsvorschrift gilt im Übrigen prinzipiell das für die Ermittlungsvorschrift ausgeführte fort, insbesondere die zweckmäßige Beschränkung auf eine bestimmte Gemischzusammensetzung (Fluidinformation) bzw. eine bestimmte Gruppe mit wenigstens zwei Zusammensetzungen des Gemischs (Gruppeninformation). Auch die Bestimmungsvorschrift kann als eine Look-Up-Tabelle und/oder ein mathematischer Zusammenhang ermittelt werden. Die Bestimmungsvorschrift kann ebenso durch einen Fit an Mess-und/oder Simulationspunkte (zusammenfassend Datenpunkte), insbesondere mittels der Methode der kleinsten Quadrate, ermittelt werden.

Zusammenfassend werden so die Einflüsse einer Abweichung von einem Referenzgemisch vorteilhaft an mehreren relevanten Stellen berücksichtigt, ohne dass zusätzliche Sensorik benötigt würde und/oder eine zu große Komplexität der entsprechenden Elektronik/ein zu hoher Energiebedarf benötigt würde.

Neben dem Verfahren betrifft die Erfindung auch eine Energiezählereinrichtung zur Ermittlung des Energieverbrauchs in einem Temperierungskreislauf, in dem ein Gemisch aus wenigstens zwei Fluiden, insbesondere ein Wasser-Glykol-Gemisch, zirkuliert, wobei die Energiezählereinrichtung eine Ultraschallmesseinrichtung zur Ermittlung des Gemischdurchflusses durch eine Laufzeitmessung, eine Temperaturmesseinrichtung zur Ermittlung einer Temperaturdifferenz zwischen dem Vorlauf und dem Rücklauf des Gemischs und eine Recheneinrichtung zur Ermittlung des Energieverbrauchs unter Berücksichtigung des Durchflusses, der Temperaturdifferenz sowie eines k-Faktors des Gemischs aufweist, welche sich dadurch auszeichnet, dass sie zur Durchführung eines erfindungsgemäßen Verfahrens ausgebildet ist. Sämtliche Ausführungen bezüglich des erfindungsgemäßen Verfahrens lassen sich analog auf die erfindungsgemäße Energiezählereinrichtung übertragen, mit welcher mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:

Fig. 1    einen den Zusammenhang zwischen der Schallgeschwindigkeit und der kinematischen Viskosität zeigenden Graphen für unterschiedliche Wasser-Glykol-Gemische und Temperaturen,

Fig. 2    einen die Abhängigkeit der Schallgeschwindigkeit von der Temperatur für verschiedene Mischungsverhältnisse und Glykole zeigenden Graphen,

Fig. 3    einen Ablaufplan eines ersten Ausführungsbeispiels eines Verfahrens zur Ermittlung eines Gemischdurchflusses,

Fig. 4    einen Ablaufplan eines zweiten Ausführungsbeispiels eines Verfahrens zur Ermittlung eines Gemischdurchflusses,

Fig. 5    einen den Zusammenhang zwischen der Schallgeschwindigkeit und dem k-Faktor zeigenden Graphen für unterschiedliche Wasser-Glykol-Gemische und Temperaturen,

Fig. 6    einen Ablaufplan eines Ausführungsbeispiels des erfindungsgemäßen Verfahrens, und

Fig. 7    eine erfindungsgemäße Energiezählereinrichtung.

Im Folgenden werden Ausführungsbeispiele der vorliegenden Erfindung für Zwei-Komponenten-Gemische, konkret ein Trägerfluid, welches aus Wasser und einem bestimmten Glykol besteht, diskutiert. Dies schränkt die Anwendbarkeit der vorliegenden Erfindung auf andere Flüssigkeiten, insbesondere Frostschutzmittel, bzw. allgemein Fluide und deren Kombinationen grundsätzlich jedoch nicht ein.

Im Rahmen der vorliegenden Erfindung wurden verschiedenste Messergebnisse in Form von Datenpunkten (Messpunkten) zusammengeführt, um zu überprüfen, ob ein (hinreichend) eindeutiger Zusammenhang zwischen der Schallgeschwindigkeit in einem Gemisch, im Folgenden $c_f$, und einem dynamischen Kennwert des Gemischs, hier der kinematischen Viskosität v, besteht, der zur unmittelbaren Ermittlung einer aktuellen kinematischen Viskosität bei der Messung des Verbrauchs thermischer Energie aus der Schallgeschwindigkeit und der aktuellen Temperatur des Gemischs herangezogen werden kann.

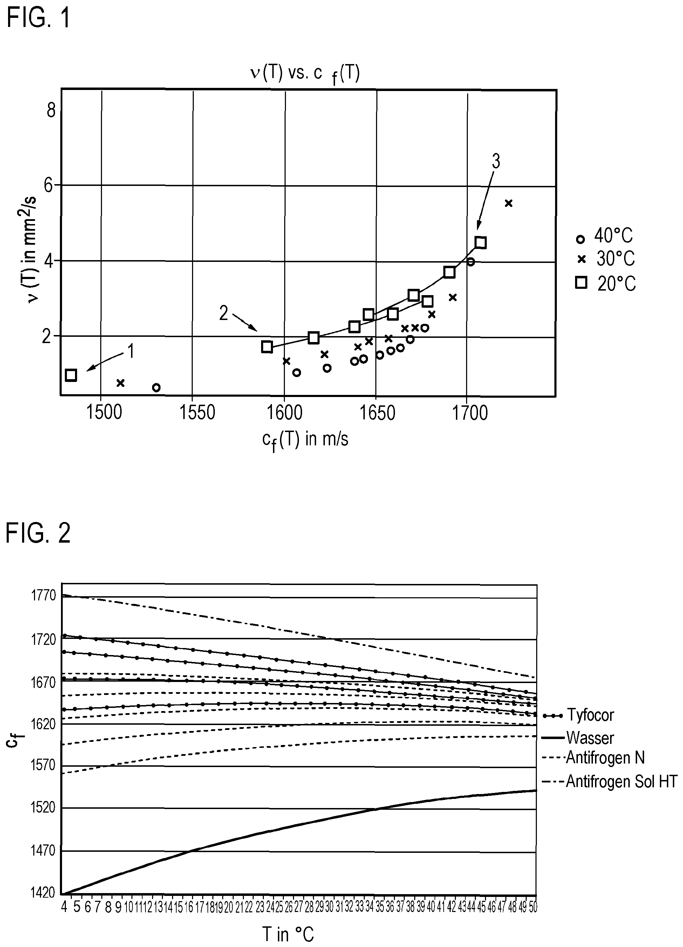

Fig. 1 zeigt beispielhaft die Abhängigkeit zwischen der Schallgeschwindigkeit $c_f$ und der kinematischen Viskosität v für verschiedene, feste Temperaturen von 20, 30 und 40 °C. Die links unten sichtbaren Datenpunkte 1 beziehen sich dabei auf reines Wasser, während sich die Datenpunktgruppe 2 auf ein erstes Wasser-Glykol-Gemisch mit Antifrogen N als Glykol bezieht, die zweite Datenpunktgruppe 3 auf ein zweites Wasser-Glykol-Gemisch mit Tyfocor L als Glykol. Die gezeigten Datenpunkte sind Messpunkte, die für unterschiedliche Mischungsverhältnisse aufgenommen wurden, welche Mischungsverhältnisse aber in einer aus derartigen Datenpunkten 1, 2, 3 ableitbaren empirischen Ermittlungsvorschrift keine Rolle mehr spielen.

Aus Fig. 1 ist ersichtlich, dass für jede Gruppe 2, 3 von Datenpunkten, die derselben Art von Glykol zugeordnet ist, eine unzweideutige Ermittlungsvorschrift zwischen der Schallgeschwindigkeit und der kinematischen Viskosität als fluiddynamischer Kennwert für die verschiedenen Temperaturen hergeleitet werden kann. Eine reine Betrachtung von Fig. 1 könnte auch eine generelle, unabhängig von der Gemischzusammensetzung, insbesondere dem Glykol, gültige Ermittlungsvorschrift, die hinreichend eindeutig ist, nahelegen, allerdings existieren in der praktischen Anwendung eine Vielzahl weiterer Glykole als die in Fig. 1 angedeuteten. Was Fig. 1 jedoch in jedem Fall zeigt, ist, dass sich unter zumindest teilweise geringem Fehleranstieg Ermittlungsvorschriften auch aus Datenpunkten 2, 3 für eine Gruppe unterschiedlicher Gemischzusammensetzungen ermitteln lassen, die ein ähnliches Verhalten aufweisen, wie beispielsweise Antifrogen N und Tyfocor L in Fig. 1.

Ein Anstieg des Glykolanteils in der Mischung führt zu einer Erhöhung der Schallgeschwindigkeit und einer Erhöhung der kinematischen Viskosität, so dass mithin in Fig. 1 für die Datenpunkte 1, 2, 3 von links nach rechts die Glykolkonzentration zunimmt.

Sind also die Grundkomponenten des Gemisches, hier die Art des Glykols, welches zusammen mit Wasser verwendet wird, bekannt, sowie ggf. sich ähnliche verhaltenden Glykole zur Bildung einer Gruppe von Gemischzusammensetzungen, kann mittels einer insbesondere durch einen Fit hergeleiteten Ermittlungsvorschrift, die als Look-Up-Tabelle und/oder mathematischer Zusammenhang vorliegen kann, aus der Temperatur und der Schallgeschwindigkeit auf die kinematische Viskosität geschlossen werden. Diese lässt sich unmittelbar herleiten, das bedeutet, eine Kenntnis des Mischungsverhältnisses, der Dichte und der dynamischen Viskosität ist nicht erforderlich.

Für die verschiedenen Temperaturen liegt, wie Fig. 1 zeigt, ein ähnlicher genereller Verlauf vor, wobei die Temperatur die Eindeutigkeit nicht kompromitiert, wenn sie als weiterer Eingangsparameter berücksichtigt wird.

Ermittlungsvorschriften können, wie oben beschrieben, für ein bestimmtes Wasser-Glykol-Gemisch, mithin insbesondere eine vorbestimmte Art von Glykol, ermittelt werden, um die kinematische Viskosität hochgenau zu bestimmen. Jedoch ist es auch denkbar, Gruppen verschiedener Zusammensetzungen des Gemischs, hier also verschiedener Wasser-Glykol-Gemische, zu bilden, deren Datenpunkte eng genug zusammenliegen, so dass der Fehler bei der Bestimmung der kinematischen Viskosität innerhalb bestimmter Grenzen, beispielsweise kleiner als 1 %, verbleibt. In diesem Fall können für derartige Gruppen mithin gemeinsame Ermittlungsvorschriften bestimmt werden.

Eine Fluidinformation, die das verwendete Glykol anzeigt, kann bei Herstellung bzw. Einbau einer Energiezählereinrichtung in diese unveränderbar eingespeichert werden, mithin hardcodiert werden, wobei es insbesondere auch möglich ist, die entsprechende, zugeordnete Ermittlungsvorschrift gemäß der Fluidinformation bzw. gemäß einer Gruppe von Wasser-Glykol-Gemischen, die der Ermittlungsvorschrift zugrunde liegt, in einem Speichermittel hardzucodieren. Möglich ist es in anderen Ausführungsbeispielen auch, die Ermittlungsvorschrift bzw. Ermittlungsvorschriften für unterschiedliche Zusammensetzungen des Gemischs und/oder unterschiedliche Gruppen von Gemischzusammensetzungen in einem Speichermittel der Energiezählereinrichtung vorzusehen, wobei eine Fluidinformation (bzw. Gruppeninformation) über ein Eingabemittel der Energiezählereinrichtung und/oder eine Kommunikationsschnittstelle empfangen werden kann, dabei aber bevorzugt Sicherheitsmaßnahmen gegen eine unzulässige Änderung, beispielsweise durch den Endbenutzer, dessen Verbrauch thermischer Energie gezählt werden soll, vorzusehen.

Fig. 2 zeigt die Abhängigkeit der Schallgeschwindigkeit $c_f$ von der Temperatur T für Wasser (durchgezogene Linie) und verschiedene Wasser-Glykol-Gemische, nämlich Wasser mit Tyfocor L (gepunktete Linien), Wasser mit Antifrogen SOLHT (strichpunktierte Linie) und Wasser mit Antrifrogen N (gestrichelte Linien), wobei die unterschiedlichen Linien für jede Gemischzusammensetzung unterschiedlichen Mischungsverhältnissen entsprechen. Hieraus kann beispielsweise abgeleitet werden, in welchem Maße Schwankungen der Schallgeschwindigkeit bei Schwankungen des Mischungsverhältnisses, also Abweichungen von einem Referenzgemisch mit einem bestimmten Mischungsverhältnis, auftreten. Wie oben bereits dargelegt, können für bestimmte Gemischzusammensetzungen und erwartete Schwankungen beispielsweise maximal erwartete Werte für den zweiten Modifikationsfaktor (Quadrat des Verhältnisses der Referenzschallgeschwindigkeit des Referenzgemisches und der Schallgeschwindigkeit eines abweichenden aktuellen Gemischs) abgeschätzt bzw. hergeleitet werden.

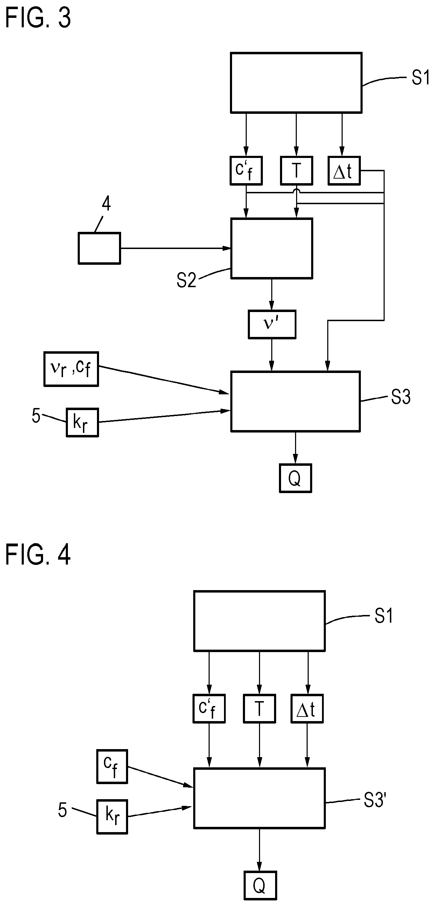

Fig. 3 zeigt ein erstes Ausführungsbeispiel, wie in einem erfindungsgemäßen Verfahren die Ermittlung des Ermittlungsfaktors für den Gemischdurchfluss modifiziert werden kann, um Effekte der Abweichung des aktuellen Gemischs (Trägerfluids) von dem Referenzfluid zu berücksichtigen, so dass eine genauere Bestimmung des Gemischdurchflusses ermöglich wird. Dabei wird eine Energiezählereinrichtung verwendet, die den Gemischdurchfluss am Rücklauf durch Ultraschall misst, weshalb ihre Messvorrichtung eine Ultraschallmesseinrichtung zur Ermittlung des Gemischdurchflusses auf Basis einer Laufzeitmessung aufweist. Hierbei wird ein Paar von sich gegenüberliegenden, in Flussrichtung versetzten Ultraschalltransducern verwendet, die eine Messung einer Laufzeit stromaufwärts (Stromaufwärts-Messung) und in entgegengesetzter Richtung stromabwäts (Stromabwärts-Messung) erlauben. Ferner ist eine Temperaturmesseinrichtung vorgesehen, die die absolute Temperatur des Gemischs beim Vorlauf und beim Rücklauf des Temperierungskreislaufs und somit eine Temperaturdifferenz zwischen dem Vorlauf und dem Rücklauf ermitteln kann. Eine Recheneinrichtung ist zur Ermittlung des Energieverbrauchs unter Berücksichtigung des Durchflusses, der Temperaturdifferenz sowie des k-Faktors des Gemischs auf Grundlage der Gleichung (1) ausgebildet.

Zunächst werden, wie grundsätzlich bekannt, in einem Schritt S1 die Laufzeitdifferenz Δt der Stromaufwärts-Messung und der Stromabwärts-Messung und die Temperatur T am Rücklauf ermittelt. Zusätzlich nutzt die Ultraschallmesseinrichtung jedoch auch die Summe der Laufzeiten und den bekannten Abstand L zwischen den Ultraschalltransducern, um die Schallgeschwindigkeit $c_f$ des Fluids zu ermitteln.

In einem Schritt S2 werden die Schallgeschwindigkeit $c_f'$ und die Temperatur T am Rücklauf als Eingabe in die empirisch wie oben beschriebene ermittelte Ermittlungsvorschrift 4 verwendet, um die kinematische Viskosität v' des aktuellen Gemischs zu bestimmen. Diese kinematische Viskosität v' wird, gemeinsam mit der bekannten kinematischen Referenzviskosität $v_r$ des Referenzgemischs und der bekannten Referenzschallgeschwindigkeit $c_f$ des Referenzgemischs, in einem Schritt S3 dann genutzt, um unter Nutzung des für das Referenzgemisch gültigen, beispielsweise im Rahmen einer Kalibrierung ermittelten Kennfelds 5 unter Verwendung der Gleichung (15) modifiziert den Ermittlungsfaktor und damit den Gemischdurchfluss Q zu ermitteln. Konkret werden hierzu der erste Modifikationsfaktor $v_r/v'$ und der zweite Modifikationsfaktor $c_f'^2/c_f^2$ und ein modifiziertes Eingangsdatum neben der Temperatur T für das Kennfeld 5 durch Multiplikation des ersten und des zweiten Modifikationsfaktors mit der Laufzeitdifferenz Δt ermittelt. Das Ausgangsdatum des Kennfelds 5 wird sodann ebenso mit dem zweiten Modifikationsfaktors multipliziert, um den Ermittlungsfaktor zu bestimmen, welcher dann wiederum gemäß Gleichung (15) mit der Laufzeitdifferenz Δt multipliziert wird, um den Gemischdurchfluss Q zu erhalten.

Fig. 4 zeigt ein gegenüber Fig. 3 modifiziertes Ausführungsbeispiel zur Ermittlung des Gemischdurchflusses Q, welches insbesondere bei "flacheren" Kennfeldern 5, insbesondere also solchen, deren lokale Steigungen einen Schwellwert nicht überschreiten, und bei Unsicherheiten bezüglich der Gemischzusammensetzung, aber relativ genau bekannten Mischungsverhältnissen, angewendet werden könnte. Dabei wird auf die Verwendung der Ermittlungsvorschrift 5 und somit den Schritt S2 verzichtet, da sich aus den Untersuchungen für diesen ersten, oben diskutierten Fehlerfall der Fehlerabschätzung ergibt, dass der erste Modifikationsfaktor zumindest in den zu Fig. 4 beschriebenen Anwendungen deutlich kleiner als der zweite Modifikationsfaktor ist und somit, zumindest bei den oben beschriebenen, schwach lokal veränderlichen Kennfeldern 5, mit nur kleinem Fehler vernachlässigt werden kann.

Entsprechend wird im modifizierten Schritt S3' nur der zweite Modifikationsfaktor ermittelt und angewendet, um den Ermittlungsfaktor und den Durchfluss zu bestimmen (Annahme $v_r/v'$ = 1).

Es sei angemerkt, dass grundsätzlich auch, zumindest bei fast konstanten Kennfeldern 5 im ersten Fehlerfall, Ausführungsbeispiele denkbar sind, in denen auf die Modifikation des Eingangsdatums verzichtet werden kann, wie oben beschrieben.

Für den oben beschriebenen zweiten Fehlerfall (geringe oder keine Unsicherheiten bezüglich der Gemischzusammensetzung, aber größere Unsicherheiten bezüglich der Mischungsverhältnisse) ist ein Ausführungsbeispiel denkbar, in dem nur der zweite Modifikationsfaktor als ungefähr gleich Eins angenommen wird. Aufgrund der einfachen und ohnehin vorgenommenen Ermittlung der Schallgeschwindigkeit ist jedoch die Nutzung des kompletten Zusammenhangs, Gleichung (15), gemäß Fig. 3 bevorzugt.

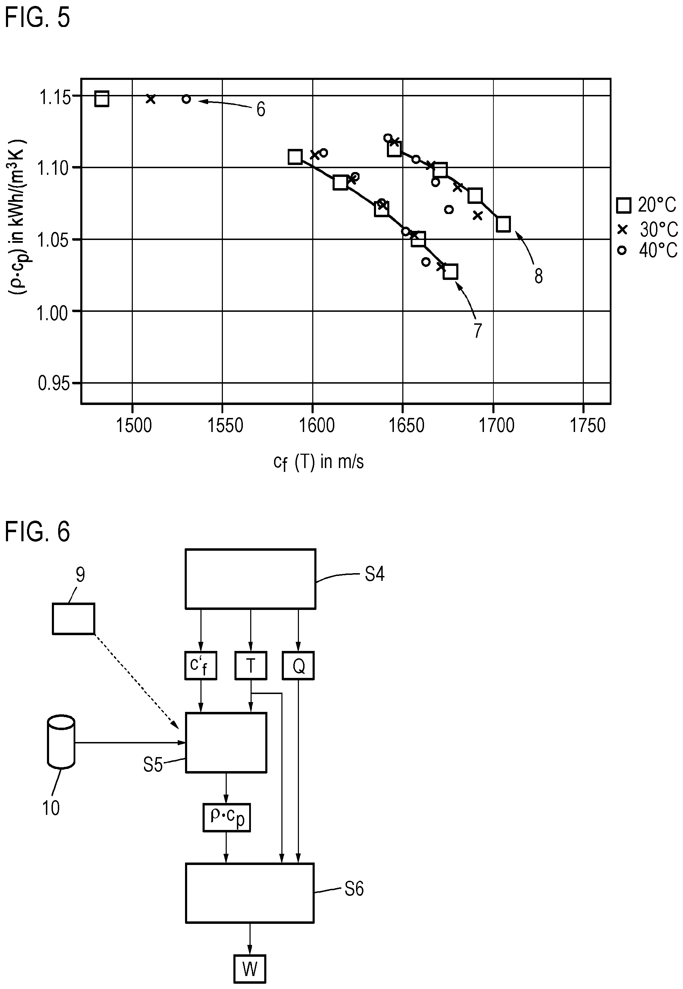

In bevorzugten Ausgestaltungen des erfindungsgemäßen Verfahrens wird die bestimmte Schallgeschwindigkeit $c_f'$ auch zur Abweichungen vom Referenzgemisch berücksichtigenden Ermittlung des k-Faktors $\rho \cdot c_p$ verwendet. Dies wird im Hinblick auf Fig. 5 und 6 näher erläutert.

Fig. 5 zeigt vergleichbar zu Fig. 1 die Abhängigkeit zwischen der Schallgeschwindigkeit $c_f$ und dem k-Faktor $\rho \cdot c_p$ für verschiedene, feste Temperaturen von 20, 30 und 40 °C. Die links oben sichtbaren Datenpunkte 6 beziehen sich dabei wiederum auf reines Wasser, die erste Datenpunktgruppe 7 bezieht sich wiederum auf das Wasser-Glykol-Gemisch mit Antifrogen N als Glykol und die zweite Datenpunktgruppe 8 auf das weitere Wasser-Glykol-Gemisch mit Tyfocor L als Glykol. Wiederum wurden diese Messpunkte für unterschiedliche Mischungsverhältnisse aufgenommen. Diese Mischungsverhältnisse spielen in einer aus derartigen Datenpunkten 6, 7, 8 ableitbaren empirischen Bestimmungsvorschrift wiederum keine Rolle mehr.

Für jede Gruppe 7, 8 von Datenpunkten, die derselben Art von Glykol zugeordnet ist, kann auch hier eine unzweideutige Bestimmungsvorschrift zwischen der Schallgeschwindigkeit und dem k-Faktor für die verschiedenen Temperaturen hergeleitet werden. In diesem Fall führt ein Anstieg des Glykolanteils in der Mischung neben einer Erhöhung der Schallgeschwindigkeit zu einem Abnehmen des k-Faktors, wobei wiederum in Fig. 5 für die Datenpunkte 7, 8 von links nach rechts die Glykolkonzentration zunimmt. Sind also die Grundkomponenten des Gemisches, hier die Art des Glykols, welches zusammen mit Wasser verwendet wird, bekannt, kann mittels der insbesondere durch einen Fit hergeleiteten Bestimmungsvorschrift, die wie die Ermittlungsvorschrift 4 als Look-Up-Tabelle und/oder mathematischer Zusammenhang vorliegen kann, aus der Temperatur und der Schallgeschwindigkeit auf den k-Faktor geschlossen werden. Der k-Faktor lässt sich unmittelbar herleiten, das bedeutet, eine Kenntnis des Mischungsverhältnisses, der Dichte und der spezifischen Wärmekapazität ist nicht erforderlich. Allgemein gilt für die Bestimmungsvorschrift dasselbe wie oben bereits hinsichtlich der Ermittlungsvorschrift 4 beschrieben, wobei eine Fluidinformation und/oder Gruppeninformation analog verwendet werden kann und auch eine Hardcodierung oder ein Empfang über das Eingabemittel und/oder die Kommunikationsschnittstelle vorliegen kann.

Für die verschiedenen Temperaturen liegt, wie Fig. 5 zeigt, ein ähnlicher genereller Verlauf vor. Abhängig von dem verwendeten Glykol und dem Mischungsverhältnis wird die Veränderung der Schallgeschwindigkeit in dem Gemisch zu einer Verschiebung aller Datenpunkte führen, wobei der generelle Trend weiterhin sichtbar ist.

Fig. 6 zeigt einen Ablaufplan eines Ausführungsbeispiels eines erfindungsgemäßen Verfahrens zum Betrieb der Energiezählereinrichtung, konkret zur Ermittlung des Verbrauchs W unter Berücksichtigung eines sich möglicherweise ändernden Trägerfluids (Gemischs), wobei auch die k-Faktor-Bestimmung integriert ist.

In einem Schritt S4 werden die Temperaturen T am Vorlauf und Rücklauf (und somit die Temperaturdifferenz ΔT) sowie der Durchfluss Q ermittelt, wobei der Schritt S4 die Schritte S1 bis S3 der Fig. 3 oder die Schritte S1 und S3' der Fig. 4 zur Ermittlung des Durchflusses Q enthält. Mithin ist nach Abschluss des Schrittes S4 auch die Schallgeschwindigkeit $c'_f$ bekannt.

In einem Schritt S5 werden die Schallgeschwindigkeit $c'_f$ und die Temperatur T am Rücklauf, wo ja vorliegend auch die Schallgeschwindigkeit $c'_f$ bzw. der Durchfluss Q gemessen werden, optional gemeinsam mit der Fluidinformation 8 (bzw. Gruppeninformation) als Eingangsgrößen für die empirisch ermittelte Bestimmungsvorschrift 10 verwendet, um unmittelbar den k-Faktor $\rho \cdot c_p$ zu bestimmen. Die Bestimmungsvorschrift 10 kann, beispielsweise als mathematischer Zusammenhang, durch einen Fit, beispielsweise nach der Methode der kleinsten Quadrate, entsprechender Datenpunkte 6, 7, 8 ermittelt worden sein. Bevorzugt liegt die Bestimmungsvorschrift 10, wie auch, falls verwendet die Ermittlungsvorschrift 4, in der Energiezählereinrichtung als eine Look-Up-Tabelle vor.

In einem Schritt S6 werden der k-Faktor $\rho \cdot c_p$, die sich aus den Temperaturen T ergebende Temperaturdifferenz und der Durchfluss Q dann, wie grundsätzlich bekannt, genutzt, um den Energieverbrauch W zu bestimmen (Gleichung (1)).

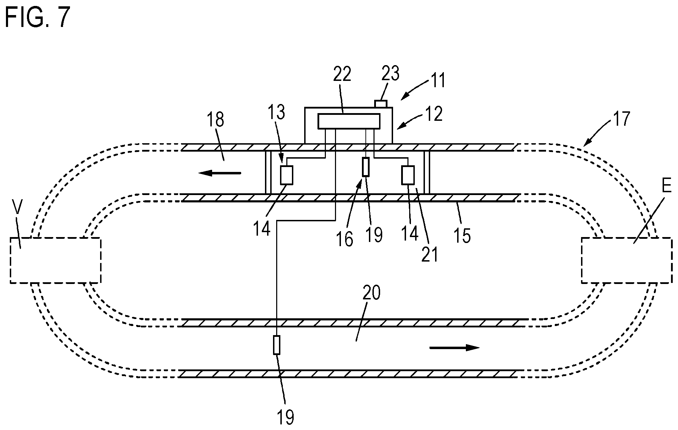

Fig. 7 zeigt in Form einer Prinzipdarstellung eine erfindungsgemäße Energiezählereinrichtung 11 mit einer Messvorrichtung 12. Die Messvorrichtung 12 umfasst eine Ultraschallmesseinrichtung 13, die im gezeigten Beispiel zwei Ultraschalltransducer (Ultraschallmessköpfe) 14 zur Ermittlung des Durchflusses durch ein Strömungsrohr 15 der Messvorrichtung 12 nutzt. Ferner umfasst die Messvorrichtung 12 eine Temperaturmesseinrichtung 16 zur Erfassung einer Temperaturdifferenz zwischen dem Vorlauf und dem Rücklauf eines in einem hier nur angedeuteten Temperierungskreislauf 17 strömenden Gemischs 18, insbesondere eines Wasser-Glykol-Gemischs. Die Messvorrichtung 12 ist in diesen Temperierungskreislauf 17 eingebunden. Die Temperaturmesseinrichtung 16 umfasst zwei Temperatursensoren 19, von denen der eine exemplarisch im Vorlauf 20 und der andere im Rücklauf 21, hier im Strömungsrohr 15 selbst, angeordnet ist. Im Temperierungskreislauf 17 ist wenigstens ein hier ebenso nur angedeuteter Wärme- oder Kälteenergieverbraucher V eingebunden. Ein entsprechender Wärme- oder Kälteenergieerzeuger E ist auf der gegenüberliegenden Seite ebenso angedeutet.

Im vorliegenden Fall ist die Ultraschallmesseinrichtung 13 auch ausgebildet, die Schallgeschwindigkeit $c'_f$ zu bestimmen, beispielsweise durch Summierung bzw. Mittelung der Laufzeiten des Ultraschallsignals stromaufwärts und stromabwärts zwischen den Ultraschalltransducern 14. Hierzu kann sie einen entsprechenden Microcontroller aufweisen.

In einer Recheneinrichtung 22 der Messeinrichtung 12 werden die Messdaten der Ultraschallmesseinrichtung 13 sowie der Temperaturmesseinrichtung 16 verarbeitet. Dabei wird zum einen die Ermittlung des Ermittlungsfaktors und somit des Durchflusses Q gemäß der Schritte S1 bis S3 oder S1 und S3' modifiziert, zum anderen mittels der Ermittlungsvorschrift 10 gemäß dem Schritt S5 ein k-Faktor bestimmt, zum anderen gemäß dem Schritt S6 der thermische Energieverbrauch ermittelt.

Die Energiezählereinrichtung 11 kann im Übrigen auch, wie bereits erwähnt, ein nicht näher gezeigtes Eingabemittel und/oder eine Kommunikationsschnittstelle 23 aufweisen, um eine Fluidinformation 9 entgegenzunehmen, wenn nicht durch Auswahl einer bestimmten Ermittlungsvorschrift 4, Bestimmungsvorschrift 10 oder als Fluidinformation 9/Gruppeninformation eine Hardcodierung in einem nicht näher gezeigten Speichermittel der Energiezählereinrichtung 11 vorgenommen wurde.

## EP 3 882 595 B1

Bezugszeichenliste

1    Gleichung
2    Datenpunkt
3    Datenpunkt
4    Ermittlungsvorschrift
5    Kennfeld
6    Schallgeschwindigkeit
7    Datenpunkt
8    Datenpunkt
9    Fluidinformation
10   Ermittlungsvorschrift
11   Energiezählereinrichtung
12   Messvorrichtung
13   Ultraschallmesseinrichtung
14   Ultraschalltransducer
15   Gleichung
16   Temperaturmesseinrichtung
17   Temperierungskreislauf
18   Gemisch
19   Temperatursensor
20   Vorlauf
21   Rücklauf
22   Recheneinrichtung
23   Kommunikationsschnittstelle

S1-S3    Schritt

## Patentansprüche

**1.** Verfahren zum Betrieb einer Energiezählereinrichtung (11) zur Ermittlung des Energieverbrauchs in einem Temperierungskreislauf (17), in dem ein Gemisch (18) aus wenigstens zwei Fluiden, insbesondere ein Wasser-Glykol-Gemisch, zirkuliert, wobei die Energiezählereinrichtung (11) eine Ultraschallmesseinrichtung (13) zur Ermittlung des Gemischdurchflusses durch eine Laufzeitmessung, eine Temperaturmesseinrichtung (16) zur Ermittlung einer Temperaturdifferenz zwischen dem Vorlauf (20) und dem Rücklauf (21) des Gemischs (18) und eine Recheneinrichtung (22) zur Ermittlung des Energieverbrauchs unter Berücksichtigung des Durchflusses, der Temperaturdifferenz sowie eines k-Faktors des Gemischs (18) aufweist, **dadurch gekennzeichnet, dass** zur Ermittlung des Gemischdurchflusses ein Laufzeitdifferenzwert mit einem unter Verwendung eines für ein Referenzgemisch vorgegebenen Kennfelds (5), insbesondere in Abhängigkeit von dem Laufzeitdifferenzwert und der Temperatur des Gemischs bei der Laufzeitmessung, bestimmbaren Ermittlungsfaktor multipliziert wird, wobei durch die Ultraschallmesseinrichtung (13) auch eine aktuelle Schallgeschwindigkeit des Gemischs (18) ermittelt wird, wobei die Bestimmung des Ermittlungsfaktors in Abhängigkeit von der aktuellen Schallgeschwindigkeit zur Korrektur eines Fehlers des Gemischdurchflusses durch eine Abweichung des Gemischs (18) von dem Referenzgemisch erfolgt, wobei die Schallgeschwindigkeit und/oder ein dynamischer Kennwert, der in Abhängigkeit von der Schallgeschwindigkeit und der Temperatur des Gemischs aufgrund einer empirisch ermittelten Ermittlungsvorschrift (4) ermittelt wird, zur Modifikation des als Eingangsdatum in das vorgegebene Kennfeld (5) eingehenden Laufzeitdifferenzwerts und/oder die Schallgeschwindigkeit zur Modifikation des von dem Kennfeld (5) ausgegebenen Ausgangswerts, insbesondere durch Multiplikation, verwendet wird.

**2.** Verfahren nach Anspruch 1, **dadurch gekennzeichnet, dass** der dynamische Kennwert des Gemischs (18) die Dichte und/oder die dynamische Viskosität und/oder die kinematische Viskosität und/oder eine zu wenigstens einer dieser Größen proportionale Größe ist.

**3.** Verfahren nach Anspruch 1 oder 2, **dadurch gekennzeichnet, dass** bei der Ermittlung des Kennwerts zusätzlich eine Fluidinformation (9), die wenigstens eines der Fluide, insbesondere das Glykol bei Wasser als weiterem Fluid, des Gemischs und/oder Referenzgemischs identifiziert, berücksichtigt wird, insbesondere eine für das Fluid bzw. die Fluidkombination spezifische Ermittlungsvorschrift (10) verwendet wird.

4. Verfahren nach Anspruch 3, **dadurch gekennzeichnet, dass** die Fluidinformation (9) und/oder die für die Fluidinformation (9) spezifische Ermittlungsvorschrift (4) vor oder bei Inbetriebnahme der Energiezählereinrichtung (11) in einem Speichermittel der Recheneinrichtung (22) hardcodiert wird oder die Fluidinformation (9) über ein Eingabemittel der Energiezählereinrichtung (11) oder eine Kommunikationsschnittstelle (23) der Energiezählereinrichtung (11) empfangen wird.

5. Verfahren nach Anspruch 1 oder 2, **dadurch gekennzeichnet, dass** die Ermittlungsvorschrift (4) aus empirischen Ergebnissen für eine Gruppe umfassend wenigstens zwei unterschiedliche Gemischzusammensetzungen, insbesondere mehrere unterschiedliche Glykole im Glykol-Wasser-Gemisch, ermittelt wird.

6. Verfahren nach einem der vorangehenden Ansprüche, **dadurch gekennzeichnet, dass** die kinematische Viskosität und/oder ein dynamischer Kennwert, aus dem die kinematische Viskosität ermittelbar und/oder der zu dieser proportional ist, in Abhängigkeit von der Schallgeschwindigkeit aufgrund einer empirisch, insbesondere für eine bestimmte Gemischzusammensetzung, ermittelten Ermittlungsvorschrift ermittelt wird, wobei der Ermittlungsfaktor bestimmt wird, indem

   - ein Eingangsdatum durch Multiplikation des Laufzeitdifferenzwerts mit dem Verhältnis der kinematischen Referenzviskosität des Referenzgemischs zu der kinematischen Viskosität und dem Verhältnis des Quadrats der Schallgeschwindigkeit zu dem Quadrat der Referenzschallgeschwindigkeit des Referenzgemischs ermittelt wird und
   - ein unter Verwendung des Eingangsdatums in das vorgegebene Kennfeld ermittelter Ausgangswert mit dem Verhältnis des Quadrats der Schallgeschwindigkeit zu dem Quadrat der Referenzschallgeschwindigkeit des Referenzgemischs multipliziert wird.

7. Verfahren nach einem der vorangehenden Ansprüche, **dadurch gekennzeichnet, dass** durch die Recheneinrichtung (22) aus der Schallgeschwindigkeit und der von der Temperaturmesseinrichtung (16) gemessenen Temperatur des Gemischs (18) aufgrund einer empirisch ermittelten Bestimmungsvorschrift (10) unmittelbar der k-Faktor ermittelt wird.

8. Verfahren nach einem der vorangehenden Ansprüche, **dadurch gekennzeichnet, dass** die Schallgeschwindigkeit (6) aus einem Mittelwert oder einer Summe eines Laufzeitwerts einer Stromabwärts-Messung und eines Laufzeitwerts einer Stromaufwärts-Messung bei zwei in Flussrichtung gegenüberliegenden Ultraschalltransducern (14) und/oder bei einer Messung mit unbewegtem Gemisch (18) ermittelt wird.

9. Energiezählereinrichtung (11) zur Ermittlung des Energieverbrauchs in einem Temperierungskreislauf (17), in dem ein Gemisch (18) aus wenigstens zwei Fluiden, insbesondere ein Wasser-Glykol-Gemisch, zirkuliert, wobei die Energiezählereinrichtung (11) eine Ultraschallmesseinrichtung (13) zur Ermittlung des Gemischdurchflusses durch eine Laufzeitmessung, eine Temperaturmesseinrichtung (16) zur Ermittlung einer Temperaturdifferenz zwischen dem Vorlauf (20) und dem Rücklauf (21) des Gemischs (18) und eine Recheneinrichtung (22) zur Ermittlung des Energieverbrauchs unter Berücksichtigung des Durchflusses, der Temperaturdifferenz sowie eines k-Faktors des Gemischs (18) aufweist, **dadurch gekennzeichnet, dass** die Energiezählereinrichtung (11) zur Durchführung eines Verfahrens nach einem der vorangehenden Ansprüche ausgebildet ist.

**Claims**

1. Method for operating an energy meter device (11) for ascertaining the energy consumption in a temperature control circuit (17), in which circulates a mixture (18) of at least two fluids, in particular a water/glycol mixture, wherein the energy meter device (11) comprises an ultrasonic measuring device (13) for ascertaining the mixture flow rate by means of a transit-time measurement, a temperature measuring device (16) for ascertaining a temperature difference between the supply (20) and the return (21) of the mixture (18), and a processing device (22) for ascertaining the energy consumption, taking into account the flow rate, the temperature difference and a k-factor of the mixture (18), **characterized in that**, in order to ascertain the mixture flow rate, a transit-time difference value is multiplied by a determination factor, which can be determined using a set of characteristic curves (5) predefined for a reference mixture, in particular can be determined as a function of the transit-time difference value and the temperature of the mixture in the transit-time measurement, wherein the ultrasonic measuring device (13) also ascertains a current speed of sound of the mixture (18), wherein the determination factor is determined on the basis of the current speed of sound in order to correct an error in the mixture flow rate due to a divergence of the mixture (18) from the reference mixture, wherein the speed of sound and/or a dynamic characteristic value, which is determined as a function of the speed of sound and the temperature of the mixture based on an empirically determined determination rule (4), is used to modify the transit-time difference value being input as input data into the predefined set of characteristic curves (5) and/or the speed of sound to modify the output value output by the set of characteristic curves (5), in particular by multiplication.

2. Method according to Claim 1, **characterized in that** the dynamic characteristic value of the mixture (18) is the density and/or the dynamic viscosity and/or the kinematic viscosity and/or a variable that is proportional to at least one of said variables.

3. Method according to Claim 1 or 2, **characterized in that**, when ascertaining the characteristic value, additionally fluid information (9), which identifies at least one of the fluids of the mixture and/or of the reference mixture, in particular identifies the glycol in water as the additional fluid, is taken into account, in particular a determination rule (10) specific to the fluid or fluid combination is used.

4. Method according to Claim 3, **characterized in that** the fluid information (9) and/or the determination rule (4) specific to the fluid information (9) is hard-coded in a storage means of the processing device (22) before or during commissioning of the energy meter device (11), or the fluid information (9) is received via an input means of the energy meter device (11) or a communication interface (23) of the energy meter device (11).

5. Method according to Claim 1 or 2, **characterized in that** the determination rule (4) is obtained from empirical results for a group comprising at least two different mixture compositions, in particular a plurality of different glycols in the glycol/water mixture.

6. Method according to any of the preceding claims, **characterized in that** the kinematic viscosity and/or a dynamic characteristic value, from which the kinematic viscosity can be ascertained and/or which is proportional thereto, is determined as a function of the speed of sound on the basis of a determination rule obtained empirically, in particular for a specific mixture composition, wherein the determination factor is determined by

- ascertaining an input datum by multiplying the transit-time difference value by the ratio of the kinematic reference viscosity of the reference mixture to the kinematic viscosity and by the ratio of the square of the speed of sound to the square of the reference speed of sound of the reference mixture, and
- multiplying an output value, which is obtained by using the input datum to the predefined set of characteristic curves, by the ratio of the square of the speed of sound to the square of the reference speed of sound of the reference mixture.

7. Method according to any of the preceding claims, **characterized in that** the processing device (22) uses an empirically obtained assignment rule (10) to ascertain the k-factor directly from the speed of sound and the temperature of the mixture (18) measured by the temperature measuring device (16).

8. Method according to any of the preceding claims, **characterized in that** the speed of sound (6) is ascertained from an average value or sum of a transit-time value from a downstream measurement and a transit-time value from an upstream measurement in the case of two ultrasonic transducers (14) facing each other in the flow direction, and/or is ascertained from one measurement in the case of a stationary mixture (18).

9. Energy meter device (11) for ascertaining the energy consumption in a temperature control circuit (17), in which circulates a mixture (18) of at least two fluids, in particular a water/glycol mixture, wherein the energy meter device (11) comprises an ultrasonic measuring device (13) for ascertaining the mixture flow rate by means of a transit-time measurement, a temperature measuring device (16) for ascertaining a temperature difference between the supply (20) and the return (21) of the mixture (18), and a processing device (22) for ascertaining the energy consumption, taking into account the flow rate, the temperature difference and a k-factor of the mixture (18), **characterized in that** the energy meter device (11) is designed to perform a method according to any of the preceding claims.

**Revendications**

1.  Procédé de fonctionnement d'un dispositif compteur d'énergie (11) destiné à déterminer la consommation d'énergie dans un circuit de régulation de température (17), dans lequel circule un mélange (18) composé d'au moins deux fluides, en particulier un mélange d'eau et de glycol, le dispositif compteur d'énergie (11) comprenant un dispositif de mesure à ultrasons (13) destiné à déterminer le débit du mélange par une mesure du temps de transit, un dispositif de mesure de température (16) destiné à déterminer une différence de température entre l'aller (20) et le retour (21) du mélange (18) et un dispositif de calcul (22) destiné à déterminer la consommation d'énergie en prenant en considération le débit, la différence de température ainsi qu'un facteur k du mélange (18), **caractérisé en ce que**, pour déterminer le débit du mélange, une valeur de différence de temps de transit est multipliée par un facteur de détermination pouvant être déterminé à l'aide d'un diagramme caractéristique (5) prédéfini pour un mélange de référence, en particulier en fonction de la valeur de différence de temps de transit et de la température du mélange lors de la mesure du temps de transit, le dispositif de mesure à ultrasons (13) déterminant également une vitesse du son actuelle du mélange (18), la détermination du facteur de détermination en fonction de la vitesse du son actuelle étant effectuée pour corriger une erreur de débit du mélange due à un écart du mélange (18) par rapport au mélange de référence, étant entendu que la vitesse du son et/ou une caractéristique dynamique, qui est déterminée en fonction de la vitesse du son et de la température du mélange sur la base d'une règle de détermination (4) établie empiriquement, est utilisée pour modifier la valeur de différence de temps de transit intervenant dans le diagramme caractéristique (5) en tant que donnée d'entrée et/ou que la vitesse du son est utilisée pour modifier la valeur de sortie du diagramme caractéristique (5), en particulier par multiplication.

2.  Procédé selon la revendication 1, **caractérisé en ce que** la caractéristique dynamique du mélange (18) est la densité et/ou la viscosité dynamique et/ou la viscosité cinématique et/ou une grandeur proportionnelle à au moins l'une de ces grandeurs.

3.  Procédé selon la revendication 1 ou 2, **caractérisé en ce que**, lors de la détermination de la caractéristique, une information de fluide (9), qui identifie au moins l'un des fluides, en particulier le glycol lorsque l'eau est l'autre fluide, du mélange et/ou du mélange de référence, est également prise en considération, en particulier, **en ce qu'**une règle de détermination (10) spécifique au fluide ou à la combinaison de fluides est utilisée.

4.  Procédé selon la revendication 3, **caractérisé en ce que** l'information de fluide (9) et/ou la règle de détermination (4) spécifique à l'information de fluide (9) sont codées en dur dans un moyen de stockage du dispositif de calcul (22) avant ou lors de la mise en service du dispositif compteur d'énergie (11), ou **en ce que** l'information de fluide (9) est reçue par l'intermédiaire d'un moyen d'entrée du dispositif compteur d'énergie (11) ou d'une interface de communication (23) du dispositif compteur d'énergie (11).

5.  Procédé selon la revendication 1 ou **2, caractérisé en ce que** la règle de détermination (4) est établie à partir de résultats empiriques pour un groupe comprenant au moins deux compositions de mélange différentes, en particulier plusieurs glycols différents dans le mélange de glycol et d'eau.

6.  Procédé selon l'une des revendications précédentes, **caractérisé en ce que** la viscosité cinématique et/ou une caractéristique dynamique à partir de laquelle la viscosité cinématique peut être déterminée et/ou qui lui est proportionnelle, est déterminée en fonction de la vitesse du son sur la base d'une règle de détermination établie empiriquement, en particulier pour une composition de mélange spécifique, le facteur de détermination étant déterminé par

    - détermination d'une donnée d'entrée par multiplication de la valeur de différence de temps de transit par le rapport de la viscosité cinématique de référence du mélange de référence à la viscosité cinématique et par le rapport du carré de la vitesse du son au carré de la vitesse du son de référence du mélange de référence ; et
    - multiplication d'une valeur de sortie déterminée par utilisation de la donnée d'entrée dans le diagramme caractéristique prédéfini par le rapport du carré de la vitesse du son au carré de la vitesse du son de référence du mélange de référence.

7.  Procédé selon l'une des revendications précédentes, **caractérisé en ce que** le facteur k est déterminé directement par le dispositif de calcul (22) à partir de la vitesse du son et de la température du mélange (18) mesurée par le dispositif de mesure de température (16), sur la base d'une règle de détermination (10) établie empiriquement.

8.  Procédé selon l'une des revendications précédentes, **caractérisé en ce que** la vitesse du son (6) est déterminée à partir d'une valeur moyenne ou d'une somme d'une valeur de temps de transit d'une mesure aval et d'une valeur de temps de transit d'une mesure amont au niveau de deux transducteurs à ultrasons (14) opposés dans le sens du flux et/ou lors d'une mesure avec un mélange (18) immobile.

9. Dispositif compteur d'énergie (11) destiné à déterminer la consommation d'énergie dans un circuit de régulation de température (17), dans lequel circule un mélange (18) composé d'au moins deux fluides, en particulier un mélange d'eau et de glycol, le dispositif compteur d'énergie (11) comprenant un dispositif de mesure à ultrasons (13) destiné à déterminer le débit du mélange par une mesure du temps de transit, un dispositif de mesure de température (16) destiné à déterminer une différence de température entre l'aller (20) et le retour (21) du mélange (18) et un dispositif de calcul (22) destiné à déterminer la consommation d'énergie en prenant en considération le débit, la différence de température ainsi qu'un facteur k du mélange (18), **caractérisé en ce que** le dispositif compteur d'énergie (11) est conçu pour mettre en œuvre un procédé selon l'une des revendications précédentes.

## FIG. 1

## FIG. 2

## FIG. 3

## FIG. 4

## FIG. 5

## FIG. 6

FIG. 7

**IN DER BESCHREIBUNG AUFGEFÜHRTE DOKUMENTE**

**In der Beschreibung aufgeführte Patentdokumente**

- DE 102007015609 A1
- EP 1975582 B1
- EP 2746742 A1
- WO 2012065276 A1
- FR 6047